# EUROPEAN PATENT SPECIFICATION

(11) **EP 3 145 211 B1**
(45) Date of publication and mention of the grant of the patent: **06.11.2019**
(21) Application number: 15185768.7
(22) Date of filing: 18.09.2015
(51) Int. Cl.: H04Q 9/00, H04L 29/08

(54) **COMMUNICATION APPARATUS AND WIRELESS COMMUNICATION SYSTEM INCLUDING THE SAME**
KOMMUNIKATIONSVORRICHTUNG UND DRAHTLOSKOMMUNIKATIONSSYSTEM DAMIT
APPAREIL DE COMMUNICATION ET SYSTÈME DE COMMUNICATION SANS FIL COMPRENANT CELUI-CI

(43) Date of publication of application: 22.03.2017
(73) Proprietor: Verisure Innovation AB, 201 23 Malmö (SE); Panasonic Corporation, Kadoma-shi Osaka 571-8501 (JP)
(72) Inventor: Nishio, Akihiko, Osaka-shi, Osaka 540-6207 (JP); Fukushima, Minoru, Osaka-shi, Osaka 540-6207 (JP); Hoshiba, Keitaro, Osaka-shi, Osaka 540-6207 (JP); Kurita, Masanori, Osaka-shi, Osaka 540-6207 (JP); Harada, Kenji, Osaka-shi, Osaka 540-6207 (JP); Yoshiki, Kazuhisa, Osaka-shi, Osaka 540-6207 (JP); Mozumi, Gon, Osaka-shi, Osaka 540-6207 (JP); Hovang, Dan, 201 23 Malmö (SE); Zander, Johan, 201 23 Malmö (SE)
(74) Representative: Appelt, Christian W.

(56) References cited:
- EP-A1- 1 699 028
- WO-A1-2015/061831
- US-A1- 2013 065 600

## Description

### BACKGROUND OF THE INVENTION

### 1. Field of the Invention

The present invention relates to a communication apparatus and a wireless communication system that includes the communication apparatus.

### 2. Description of the Related Art

A system (a sensor network system) that collects and analyzes information from sensor nodes in which various types of sensors are installed is available in the prior art (for example, JP 2011-216973 A (hereinafter, referred to as Document 1)).

In the system described in Document 1, the sensor nodes are used in a residence monitoring service. In the system described in Document 1, a home interior system includes a gateway and a plurality of sensor nodes. Each of the plurality of sensor nodes communicates with the gateway by comparatively short-range wireless communication corresponding to a predetermined standard. Measurement information obtained by each sensor node is not transmitted to the gateway every time the measurement information is updated, and instead, mainly with the aim of suppressing a power consumption, the measurement information is initially stored in a memory and then transmitted at a predetermined timing.

In a conventional system such as that described in Document 1, however, when a data transmission speed between a communication apparatus (the sensor node) and a control apparatus (the gateway) is increased, an amount of power consumed by the communication apparatus during communication may increase.

EP 1 699 028 A1 relates to a wireless alarm system with remote alarm receipt. In this system, a main controller used which has a sensor or a camera and which performs wireless communication with the sensor or the camera so as to control the sensor or the camera. The main controller has a plurality of communication sections that perform wireless communication by using communication systems having different communication speeds. The camera transmits and receives information by performing wireless communication with the main controller. The camera is provided with a first camera communication section and a second camera communication section that perform wireless communication by using communication systems having different communication speeds, and a camera communication control section for selecting the first camera communication section and the second camera communication section according to the information to be transmitted and received, as a communication section to perform communication.

WO 2015/061831 A1 relates to remotely controlling the supply of electricity to a lighting element The device includes a wireless communications module configured for peer-to-peer communications and a microcontroller. The electrical supply is varied based on a command received through the wireless communications module that may include specifying one or more particular LEDs in order to generate a spectrum of different colors from the lighting element

### SUMMARY OF THE INVENTION

The present invention has been designed in consideration of the circumstances described above, and an object thereof is to provide a communication apparatus and a wireless communication system including the communication apparatus with which an amount of power consumed during communication can be reduced even when a data transmission speed is increased. The invention is defined by independent claim 1. Advantageous embodiments are subject to the dependent claims.

A communication apparatus according to an aspect of the present invention includes: a first communication unit (11) that performs wireless communication with a control apparatus using a first communication system; a second communication unit (12) that performs wireless communication with the control apparatus using a second communication system having a higher transmission speed than the first communication system; and a control unit (13, 13A). The control unit (13, 13A) is configured to activate the second communication unit (12) when the first communication unit (11) receives an activation request signal from the control apparatus, increase power consumption of said second communication unit (12), when said second communication unit (12) is activated, when said second communication unit (12) is activated; increase power consumption of said second communication unit (12), when a link (32) between said second communication unit (12) and said control apparatus is established, wherein said increase in the power consumption is relative to the power consumption prior to the time the link (32) is established; not to establish the link (32) b until said first communication unit (11) receives a connection request signal from said control apparatus, even after said second communication unit (12) is activated, and to establish the link (32) between the second communication unit (12) and the control apparatus when the first communication unit (11) receives a connection request signal from the control apparatus after the second communication unit (12) is activated.

Further, a wireless communication system according to an aspect of the present invention includes the communication apparatus (1, 1A) and the control apparatus.

### BRIEF DESCRIPTION OF THE DRAWINGS

The drawings illustrate one or a plurality of embodiments in accordance with the present teaching, but these embodiments are merely examples, and the present invention is not limited thereto. In the drawings, identical reference symbols indicate identical or similar elements.
FIG. 1 is a block diagram showing respective configurations of a communication apparatus and a gateway according to a first embodiment;
FIG. 2 is a view showing a configuration of a wireless communication system according to the first embodiment;
FIG. 3 is a sequence diagram showing an operation of the wireless communication system according to the first embodiment;
FIG. 4 is a view showing the configuration of the wireless communication system according to the first embodiment;
FIG. 5 is a block diagram showing respective configurations of a communication apparatus and a gateway according to a second embodiment; and
FIG. 6 is a sequence diagram showing an operation of the wireless communication system according to the second embodiment.

### DESCRIPTION OF EMBODIMENTS

### (First Embodiment)

### (1) Outline

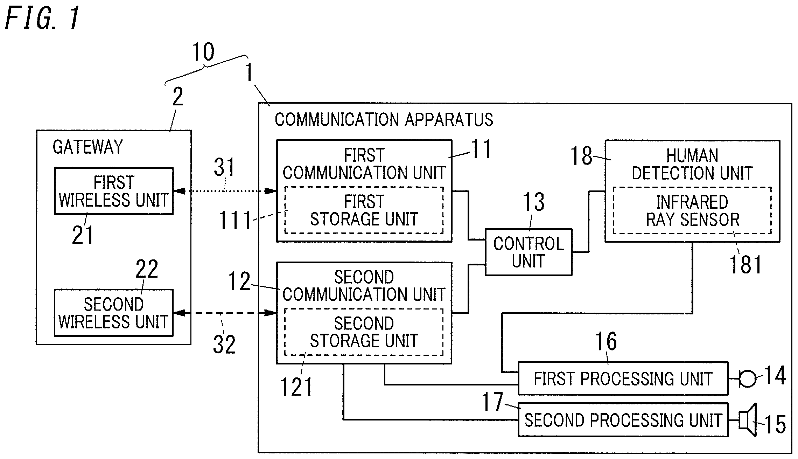

As shown in FIG. 1, a communication apparatus 1 according to this embodiment includes a first communication unit 11, a second communication unit 12, and a control unit 13.

The first communication unit 11 performs wireless communication with a gateway (a control apparatus) 2 using a first communication system. The second communication unit 12 performs wireless communication with the gateway 2 using a second communication system having a higher transmission speed than the first communication system. The control unit 13 is configured to activate the second communication unit 12 when the first communication unit 11 receives an activation request signal from the gateway 2. The control unit 13 is configured to establish a link 32 between the second communication unit 12 and the gateway 2 when the first communication unit 11 receives a connection request signal from the gateway 2 after the second communication unit 12 is activated.

Here, the "transmission speed" is an amount of data that can be transmitted within a fixed time. As the transmission speed increases, the amount of data that can be transmitted within the fixed time also increases. Therefore, to transmit a large volume of data such as voice data or video data, for example, the second communication unit 12 is more suitable than the first communication unit 11. Further, the "link" denotes a communication path between a plurality of nodes (the communication apparatus 1 and the gateway 2, for example) constituting a communication network. Here, when the link 32 is established between the second communication unit 12 and the gateway 2, radio waves are physically transmitted and received between the second communication unit 12 and the gateway 2. In other words, when the link 32 is established, data can be transmitted from the second communication unit 12 to the gateway 2 and from the gateway 2 to the second communication unit 12. Accordingly, a condition in which data can be transmitted bi-directionally between the second communication unit 12 and the gateway 2 corresponds to a condition in which the link 32 is established. A condition in which the second communication unit 12 is on standby, or in other words a condition in which the second communication unit 12 can receive signals from the gateway 2 unilaterally, on the other hand, corresponds to a condition in which the link 32 is not established (a condition in which the link 32 is cut).

Hence, the communication apparatus 1 according to this embodiment includes two communication units, namely the first communication unit 11 and the second communication unit 12, for communicating with the gateway 2 serving as the control apparatus. The first communication unit 11 and the second communication unit 12 both communicate with the gateway 2 by wireless communication. However, the first communication unit 11 and the second communication unit 12 use different communication systems. The second communication system used by the second communication unit 12 is capable of transmitting data at a higher speed than the first communication system used by the first communication unit 11. Therefore, when the second communication unit 12 is used, the speed at which data are transmitted between the communication apparatus 1 and the gateway 2 can be increased.

Further, the control unit 13 activates the second communication unit 12 when the first communication unit 11 receives the activation request signal from the gateway 2. In other words, the second communication unit 12 is not activated until the first communication unit 11 receives the activation request signal from the gateway 2. In the communication apparatus 1, therefore, the second communication unit 12 is activated only when needed, and as a result, a power consumption of the second communication unit 12 can be reduced.

Furthermore, the control unit 13 is configured to establish the link 32 between the second communication unit 12 and the gateway 2 when the first communication unit 11 receives the connection request signal from the gateway 2 following activation of the second communication unit 12. In other words, the link 32 between the second communication unit 12 and the gateway 2 is not established until the first communication unit 11 receives the connection request signal from the gateway 2, even after the second communication unit 12 is activated. In the communication apparatus 1, therefore, the second communication unit 12 remains on standby, or in other words the link 32 remains cut, until data transmission by the second communication unit 12 is started, even after the second communication unit 12 is activated, and as a result, the power consumption of the second communication unit 12 can be reduced.

According to the communication apparatus 1, therefore, the power consumption of the second communication unit 12 can be reduced even when the data transmission speed is increased by using the second communication unit 12. Hence, with the communication apparatus 1, the amount of power consumed during communication can be reduced even when the data transmission speed is increased.

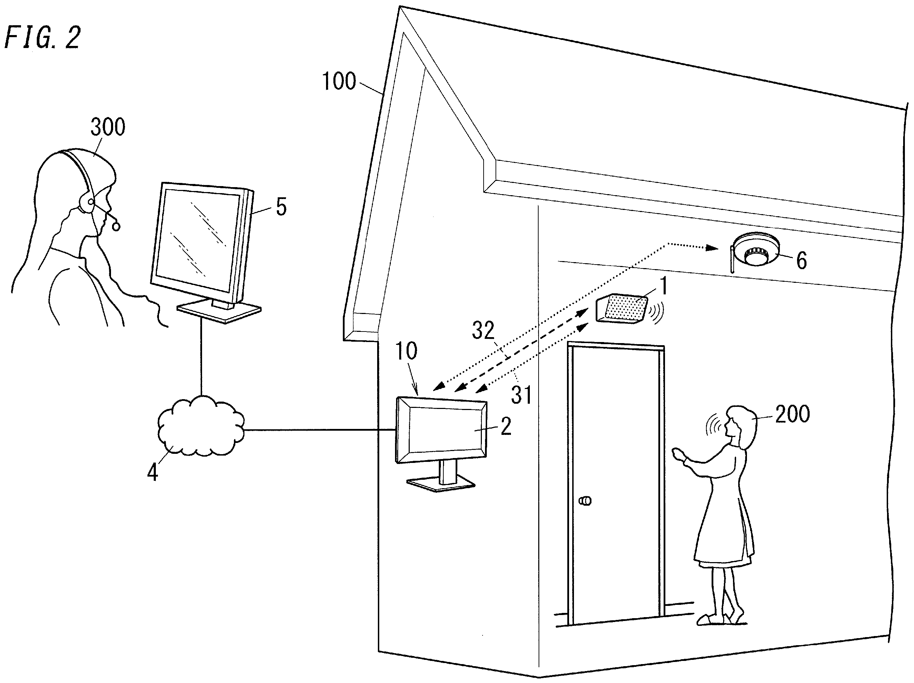

Further, as shown in FIG. 2, a wireless communication system 10 includes the communication apparatus 1 and the gateway (the control apparatus) 2. In the wireless communication system 10, the communication apparatus 1 and the gateway 2 are capable of wireless communication using two communication systems, namely the first communication system and the second communication system.

In this embodiment, the wireless communication system 10 is employed in a remote monitoring service with the aim of preventing crime, fire, and so on, for example. The remote monitoring service is applied to a residence 100. A user (a resident) 200 who has entered into an agreement with a business operator (a security firm or the like) providing the remote monitoring service resides at the residence 100. In accordance with the remote monitoring service, the communication apparatus 1 and the gateway 2 are both disposed in the residence 100. The gateway 2 is connected to a public network 4 such as the Internet. The gateway 2 is configured to be capable of communicating with a monitoring apparatus 5 via the public network 4. The monitoring apparatus 5 is disposed in a call center operated by the business operator providing the remote monitoring service.

Hence, the communication apparatus 1 in the residence 100 and the monitoring apparatus 5 in the call center are capable of communicating with each other via the gateway 2. In other words, the gateway 2 functions as a relay that relays data between the communication apparatus 1 and the monitoring apparatus 5. As a result, an operator 300 in a remote location from the residence 100 can monitor conditions in the residence 100 using the monitoring apparatus 5. When the communication apparatus 1 includes a microphone, for example, the communication apparatus 1 can transmit voice data relating to a voice in the residence 100 to the monitoring apparatus 5.

### (2) Detailed description

The communication apparatus 1 and the wireless communication system 10 using the communication apparatus 1 according to this embodiment will now be described in detail.

Further, in the following description, a detached residence is used as an example of the residence 100 to which the remote monitoring service employing the wireless communication system 10 is applied, or in other words a building serving as a monitoring subject of the monitoring apparatus 5. Note, however, that the building serving as the monitoring subject of the monitoring apparatus 5 is not limited to a detached residence, and may be a residence other than a detached residence, such as an individual unit of an apartment building, for example, or a non-residential building such as an office, a store, or a care facility.

### (2.1) System configuration

First, an overall configuration of the wireless communication system 10 will be described with reference to FIG. 2.

The wireless communication system 10 includes, as constituent elements, the communication apparatus 1, the gateway 2, the monitoring apparatus 5, and a monitoring terminal 6. The monitoring terminal 6 has a function for communicating with the gateway 2. The gateway 2 also functions as a relay that relays data between the monitoring terminal 6 and the monitoring apparatus 5.

In the wireless communication system 10, wireless communication is to be performed between at least the communication apparatus 1 and the gateway 2. In other words, it is not essential to the wireless communication system 10 that communication between the gateway 2 and the monitoring apparatus 5 and communication between the monitoring terminal 6 and the gateway 2 be performed wirelessly. Note that the communication apparatus 1 and the gateway 2 constitute bare minimum constituent elements of the wireless communication system 10, and therefore the monitoring apparatus 5 and the monitoring terminal 6 need not be included in the constituent elements of the wireless communication system 10.

In the wireless communication system 10, a group of monitoring subjects constituted by a plurality of residences 100 serve as monitoring subjects of the monitoring apparatus 5. In this case, the plurality of gateways 2 provided in the plurality of residences 100 belonging to the group of monitoring subjects communicate with the single monitoring apparatus 5, and therefore a one-to-many relationship is established between the monitoring apparatus 5 and the gateways 2. Note, however, that in this embodiment, for ease of description, a case in which the single residence 100 serves as the monitoring subject of the monitoring apparatus 5, or in other words a case in which a one-to-one relationship is established between the monitoring apparatus 5 and the gateway 2, will be described as an example.

In the wireless communication system 10 according to this embodiment, the communication apparatus 1 is a communication terminal including a microphone 14 (see FIG. 1) and a speaker 15 (see FIG. 1). In other words, the communication apparatus 1 has a verbal communication function for exchanging voice data with the monitoring apparatus 5 bi-directionally via the gateway 2. As a result, verbal communication is realized between the user 200 in the residence 100 and the operator 300 in the call center. The communication apparatus 1 is disposed in a living space such as a living room within the residence 100. The communication apparatus 1 is mounted on a wall, for example, so that the voice of the user 200 reaches the communication apparatus 1.

As will be described in more detail in a section "(2.2) Configuration of communication apparatus", the communication apparatus 1 uses the second communication unit 12, from the first communication unit 11 (see FIG. 1) and the second communication unit 12 (see FIG. 1), to transmit and receive voice data to and from the gateway 2. Therefore, when the link 32 between the second communication unit 12 and the gateway 2 is cut, the verbal communication function between the communication apparatus 1 and the monitoring apparatus 5 is not active. The verbal communication function between the communication apparatus 1 and the monitoring apparatus 5 is active only when the link 32 between the second communication unit 12 and the gateway 2 is established.

The communication apparatus 1 may be disposed in a plurality in relation to the single residence 100. In this case, the single gateway 2 communicates with the plurality of communication apparatuses 1, and therefore a one-to-many relationship is established between the gateway 2 and the communication apparatuses 1. Note, however, that in this embodiment, unless indicated otherwise, a case in which a single communication apparatus 1 is disposed in the single residence 100, or in other words a case in which a one-to-one relationship is established between the gateway 2 and the communication apparatus 1, will be described as an example.

In this embodiment, the first communication system used by the first communication unit 11 is a low power radio system not requiring a license. Specifications such as a used frequency band and an antenna power are prescribed for this type of low power radio system in each individual country in accordance with the application and so on. In Europe, for example, a low power radio system using radio waves in an 868 MHz band is prescribed. In Japan, a low power radio system using radio waves in a 420 MHz band and a 920 MHz band is prescribed. These low power radio systems will be referred to hereafter as short range devices (SRD).

The second communication system used by the second communication unit 12, meanwhile, is digital enhanced cordless telecommunications (DECT) compliant system. The second communication system is capable of transmitting data at a higher speed than the first communication system. The second communication system (DECT) consumes a larger amount of power than the first communication system (SRD). Therefore, when communication between the gateway 2 and the first communication unit 11 is compared with communication between the gateway 2 and the second communication unit 12, the amount of power consumed by the communication apparatus 1 is larger during communication between the gateway 2 and the second communication unit 12. In other words, the power consumption of the first communication system is lower than that of the second communication system. Here, "DECT" includes DECT-ultra low energy (ULE).

The monitoring terminal 6 is a fire detector, a human body sensor, a window sensor, or the like. The fire detector detects the presence of fire in the residence 100, and transmits a warning signal to the gateway 2 when fire is present. The human body sensor and the window sensor detect the presence of an intruder in the residence 100, and transmit a warning signal to the gateway 2 when an intruder is present. In other words, the monitoring terminal 6 transmits a warning signal to the gateway 2 when an abnormality of some kind occurs in the residence 100.

The monitoring terminal 6 may be disposed in a plurality in the single residence 100. In this embodiment, however, a case in which a single monitoring terminal 6 is disposed in the single residence 100, or in other words a case in which a one-to-one relationship is established between the gateway 2 and the monitoring terminal 6, will be described as an example. In this embodiment, the monitoring terminal 6 is a fire detector. The monitoring terminal 6 is mounted on a ceiling of a living space such as the living room, for example, within the residence 100.

In this embodiment, the monitoring terminal 6 and the gateway 2 communicate with each other wirelessly using radio waves as a transmission medium. The system by which the monitoring terminal 6 and the gateway 2 communicate with each other is identical to the first communication system used by the first communication unit 11, i.e. SRD.

The communication apparatus 1 and the monitoring terminal 6 are both battery-driven. Note, however, that it is not essential to the wireless communication system 10 that the communication apparatus 1 and the monitoring terminal 6 be battery-driven, and at least one of the communication apparatus 1 and the monitoring terminal 6 may be configured to operate upon reception of a supply of power from a system power supply. Further, it is not essential to this embodiment that the communication apparatus 1 and the monitoring terminal 6 be provided in the residence 100, and at least one of the communication apparatus 1 and the monitoring terminal 6 may be disposed on the exterior (on an exterior wall or the like) of the residence 100 so as to be annexed to the residence 100.

The gateway 2 is disposed in the residence 100. The gateway 2 is electrically connected to the system power supply by being connected to a power outlet (a socket) provided in the residence 100. The gateway 2 operates upon reception of a supply of power from the system power supply.

The gateway 2 has a function for communicating respectively with the communication apparatus 1 and the monitoring terminal 6 in the residence 100. The gateway 2 includes a first wireless unit 21 (see FIG. 1) and a second wireless unit 22 (see FIG. 1) for communicating with the communication apparatus 1. The first wireless unit 21 communicates wirelessly with the first communication unit 11 using the first communication system (SRD). The second wireless unit 22 communicates wirelessly with the second communication unit 12 using the second communication system (DECT). In this embodiment, the first wireless unit 21 is also used to communicate wirelessly with the monitoring terminal 6.

The gateway 2 also has a function for communicating with the monitoring apparatus 5 in the call center. The gateway 2 is connected to the public network 4 so as to communicate with the monitoring apparatus 5 bi-directionally over the public network 4.

A basic function of the gateway 2 is to relay voice data between the communication apparatus 1 and the monitoring apparatus 5. The gateway 2 also functions to transmit a monitoring signal to the monitoring apparatus 5 upon reception of a warning signal from the monitoring terminal 6. Here, the "monitoring signal" is a signal generated by the gateway 2 using the warning signal as a trigger, and may include information included in the warning signal or a standard message or command corresponding to the warning signal.

The monitoring apparatus 5 is disposed in the call center. The monitoring apparatus 5 is connected to the public network 4 so as to communicate with the gateway 2 bi-directionally over the public network 4. In this embodiment, the monitoring apparatus 5 is constituted mainly by a computer, and the computer is caused to function as the monitoring apparatus 5 by having a CPU of the computer execute a program stored in a memory.

A basic function of the monitoring apparatus 5 is a verbal communication function for exchanging voice data with the communication apparatus 1 bi-directionally via the gateway 2. The monitoring apparatus 5 also functions to notify the operator 300 of the information included in the monitoring signal by outputting the information in the form of a display or a voice upon reception of the monitoring signal from the gateway 2. Note that the monitoring apparatus 5 includes a user interface such as a headset through which a voice is input and output during verbal communication between the operator 300 and the user 200, and a keyboard for receiving operation input from the operator 300.

### (2.2) Configuration of communication apparatus

Next, a specific example of a configuration of the communication apparatus 1 will be described with reference to FIG. 1.

The communication apparatus 1 includes, in addition to the first communication unit 11, the second communication unit 12, and the control unit 13, the microphone 14, the speaker 15, a first processing unit 16, a second processing unit 17, and a human detection unit 18. The communication apparatus 1 also includes a battery and so on.

The first communication unit 11 is a communication module that communicates with the gateway 2 using the first communication system (SRD). The first communication unit 11 has a transmission function and a reception function. The first communication unit 11 is electrically connected to the control unit 13 so as to be controlled by the control unit 13. The first communication unit 11 includes a first storage unit 111. Here, the first storage unit 111 is a volatile memory. At least a part of a storage area of the first storage unit 111 corresponds to a storage unit in which to store authentication information used to establish the link 32. Here, the "authentication information" is information relating to communication by the second communication unit 12, this information being required to establish the link 32 between the second communication unit 12 and the gateway 2. More specifically, the authentication information is information including an ID and key information.

FIG. 1 shows a condition in which a link (a first link) 31 is established between the first communication unit 11 and the gateway (the first wireless unit 21) 2. When the link 31 is established, data can be transmitted bi-directionally between the first communication unit 11 and the gateway 2. In this embodiment, the first communication unit 11 is activated automatically upon activation of the communication apparatus 1, whereby the first communication unit 11 establishes the link 31 between itself and the first wireless unit 21 of the gateway 2.

The second communication unit 12 is a communication module that communicates with the gateway 2 using the second communication system (DECT). Due to the difference between the communication systems, the power consumption of the second communication unit 12 is larger than the power consumption of the first communication unit 11. The second communication unit 12 has a transmission function and a reception function. The second communication unit 12 is electrically connected to the control unit 13 so as to be controlled by the control unit 13. The second communication unit 12 includes a second storage unit 121. Here, the second storage unit 121 is a nonvolatile memory. The authentication information used to establish the link 32 is stored in at least a part of a storage area of the second storage unit 121.

FIG. 1 shows a condition in which the link (a second link) 32 is established between the second communication unit 12 and the gateway (the second wireless unit 22) 2. When the link 32 is established, data can be transmitted bi-directionally between the second communication unit 12 and the gateway 2. The second communication unit 12 is not activated until the first communication unit 11 receives the activation request signal from the gateway 2, even after the communication apparatus 1 is activated.

In this embodiment, the second communication unit 12 is used to transmit voice data. For this purpose, the first processing unit 16 and the second processing unit 17 are electrically connected to the second communication unit 12 so as to operate in conjunction with the second communication unit 12. Note that the first processing unit 16 and the second processing unit 17 may be provided integrally with the second communication unit 12, and in this case, the first processing unit 16, the second processing unit 17, and the second communication unit 12 are constituted by a single chip.

The first processing unit 16 is electrically connected to the microphone 14. The microphone 14 converts a voice into an analog electric signal (a voice signal), and outputs the electric signal to the first processing unit 16. The first processing unit 16 includes an amplifier, an A/D converter, and a signal processing circuit. The first processing unit 16 amplifies the voice signal input from the microphone 14 and then converts the amplified voice signal into a digital signal. The first processing unit 16 then implements processing such as automatic volume control, compression, and encoding on the digital signal, and then outputs the signal to the second communication unit 12 as voice data.

The second processing unit 17 is electrically connected to the speaker 15. The second processing unit 17 includes a signal processing circuit, a D/A converter, and an amplifier. The second processing unit 17 implements processing such as decoding, expansion, and volume adjustment on the voice data input from the second communication unit 12, and then converts the digital signal obtained as a result into an analog electric signal (a voice signal). The second processing unit 17 amplifies the voice signal and outputs the amplified voice signal to the speaker 15. The speaker 15 converts the voice signal input from the second processing unit 17 into a voice.

The human detection unit 18 detects the presence of a human being in a subject area. The subject area is set in at least an audible range of the voice output from the speaker 15. The subject area is set in the room of the residence 100 where the communication apparatus 1 is disposed, for example. The human detection unit 18 is electrically connected to the control unit 13 so as to be controlled by the control unit 13.

The human detection unit 18 includes a passive infrared ray (PIR) sensor 181 that detects the presence of a human being on the basis of variation in an amount of infrared rays input from the subject area. The infrared ray sensor 181 uses a pyroelectric element so that the human detection unit 18 detects the presence of a human being in the subject area in accordance with variation in the amount of infrared rays received by the pyroelectric element.

The human detection unit 18 also includes a sound sensor that detects the presence of a human being on the basis of a sound pressure of a sound input from the subject area. In this embodiment, the microphone 14 used for verbal communication and the first processing unit 16 double as the sound sensor. Accordingly, the microphone 14 and the first processing unit 16 correspond to the sound sensor. More specifically, the human detection unit 18 is electrically connected to the first processing unit 16. The first processing unit 16 outputs a sound pressure level expressing the sound pressure of a sound input into the microphone 14 to the human detection unit 18 as human detection information. Here, the "human detection information" is information used to detect the presence of a human being. The sound pressure level input into the human detection unit 18 will be referred to hereafter as an "SPL". The human detection unit 18 compares the input SPL with a predetermined threshold, and determines that a human being is present in the subject area when the SPL equals or exceeds the threshold.

In other words, the human detection unit 18 detects the presence of a human being in the subject area on the basis of the output of the infrared ray sensor 181 and the output (the SPL) of the sound sensor. Here, the human detection unit 18 determines the presence of a human being on the basis of both the output of the infrared ray sensor 181 and the output of the sound sensor. Note, however, that the human detection unit 18 may determine that a human being is present as long as at least one of the output of the infrared ray sensor 181 and the output of the sound sensor indicates the presence of a human being.

The function for determining the presence of a human being is not essential to the human detection unit 18, and may be provided in the gateway 2 or the monitoring apparatus 5 instead. In this case, the human detection unit 18 outputs the human detection information used to detect the presence of a human being, for example the SPL in the case of the sound sensor, to the gateway 2 or the monitoring apparatus 5. In other words, a detection result of the human detection unit 18 is not limited to information directly indicating whether or not a human being is present, and may be human detection information (the SPL, for example) used to determine whether or not a human being is present. Further, the presence of a human being may be determined by the operator 300 on the basis of the human detection information (the SPL, for example) output from the monitoring apparatus 5.

In this embodiment, the control unit 13 is constituted by a computer such as a microcomputer that is constituted mainly by a central processing unit (CPU) and a memory. In other words, the control unit 13 is realized by a computer. The computer functions as the control unit 13 when the CPU executes a program stored in the memory. Here, the program is recorded in the memory of the control unit 13 in advance, but may be provided over on an electric communication line such as the Internet or recorded on a recording medium such as a memory card.

The control unit 13 respectively controls the first communication unit 11, the second communication unit 12, and the human detection unit 18. In this embodiment, the control unit 13 includes first to fourth functions, described below, as main functions.

The first function of the control unit 13 is a function for controlling the second communication unit 12 so as to activate the second communication unit 12 and establish the link 32 between the second communication unit 12 and the gateway 2. The control unit 13 activates the second communication unit 12 when the first communication unit 11 receives the activation request signal from the gateway 2. Further, the control unit 13 establishes the link 32 between the second communication unit 12 and the gateway 2 when the first communication unit 11 receives the connection request signal from the gateway 2 after the second communication unit 12 is activated.

The first function of the control unit 13 also includes a function for controlling the second communication unit 12 so as to cut the link 32 between the second communication unit 12 and the gateway 2. The control unit 13 cuts the link 32 between the second communication unit 12 and the gateway 2 when the first communication unit 11 receives a cut request signal from the gateway 2. Basically, the control unit 13 performs control to start and stop communication between the second communication unit 12 and the gateway 2 in response to the connection request signal and the cut request signal received by the first communication unit 11.

Note that the control unit 13 is configured to stop the second communication unit 12 following the elapse of a fixed time after the link 32 is cut. In other words, when a fixed time counted by a timer elapses after the link 32 is cut, the second communication unit 12 is stopped automatically, whereby the communication apparatus 1 returns to the condition prior to activation of the second communication unit 12.

The second function of the control unit 13 is a function for transmitting a condition signal from the first communication unit 11 to the gateway 2. Here, the "condition signal" is a signal expressing at least one of an operating condition of the second communication unit 12 and a condition of the link 32. The operating condition of the second communication unit 12 includes a condition indicating whether or not activation of the second communication unit 12 is complete. The condition of the link 32 includes a condition indicating whether or not the link 32 is established. The control unit 13 transmits the condition signal from the first communication unit 11 to the gateway 2 after activating the second communication unit 12 but before establishing the link 32. Note that the condition signal may be either a signal expressing only one of the operating condition of the second communication unit 12 and the condition of the link 32 or a signal expressing both.

The third function of the control unit 13 is a function for transmitting a human detection signal from the first communication unit 11 to the gateway 2. Here, the "human detection signal" is a signal expressing the detection result of the human detection unit 18. The detection result of the human detection unit 18 may be information indicating directly whether or not a human being is present or information (the SPL, for example) used to determine whether or not a human being is present. The control unit 13 transmits the human detection signal from the first communication unit 11 to the gateway 2 before establishing the link 32. Note that the transmission timing of the human detection signal may be set either before or after the second communication unit 12 is activated.

The fourth function of the control unit 13 is a function for transmitting an authentication signal from the first communication unit 11 to the gateway 2. Here, the "authentication signal" is a signal expressing the authentication information stored in the first storage unit 111. Here, as described above, the authentication information is information used by the second communication unit 12, and includes an ID and key information. The control unit 13 transmits the authentication signal from the first communication unit 11 to the gateway 2 before establishing the link 32. Note that the transmission timing of the authentication signal may be set either before or after the second communication unit 12 is activated.

The gateway 2, as described above, controls the communication apparatus 1 by transmitting the activation request signal, the connection request signal, and the cut request signal to the communication apparatus 1. Hence, the gateway 2 also functions as a control apparatus in relation to the communication apparatus 1.

Note that in this embodiment, the microphone 14 and the speaker 15 are the only means provided in the communication apparatus 1 to output and receive information to and from the user 200, and a user interface (a switch or the like) that is operated by the user 200 by hand does not exist in the communication apparatus 1. However, a user interface that is operated by the user 200 by hand may be provided in the communication apparatus 1.

### (3) Operations

### (3.1) Basic operation

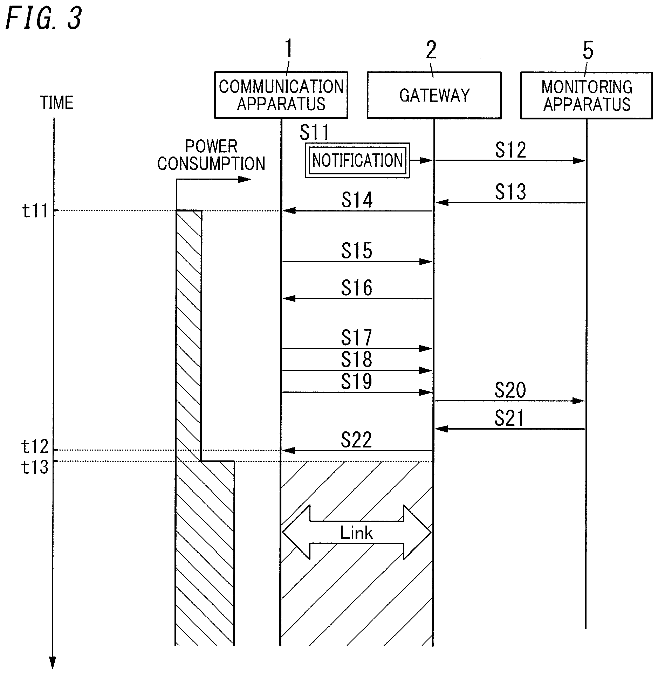

A basic operation of the communication apparatus 1 and the wireless communication system 10 including the communication apparatus 1 according to this embodiment will now be described with reference to FIG. 3. In FIG. 3, the ordinate is a temporal axis showing a flow of signals between nodes (the communication apparatus 1, the gateway 2, and the monitoring apparatus 5) in time series. The ordinate also shows the power consumption of the second communication unit 12 as "power consumption".

Here, an operation of the wireless communication system 10 up to a point at which verbal communication is established between the operator 300 and the user 200 in the residence 100 in a case where the monitoring terminal 6 detects an abnormality in the residence 100 will be described as an example. It is assumed that when the abnormality occurs, the communication apparatus 1 and the first communication unit 11 are activated but the second communication unit 12 is not yet activated. Accordingly, in FIG. 3, signals (S14 to S19, S22) transmitted between the communication apparatus 1 and the gateway 2 are all transmitted or received by the first communication unit 11 using the first communication system (SRD).

The gateway 2 receives a warning signal S11 from the monitoring terminal 6, and transmits a monitoring signal S12 to the monitoring apparatus 5. The monitoring apparatus 5 then transmits an activation signal S13 to the gateway 2. The activation signal S13 is a signal instructing the gateway 2 to transmit the activation request signal.

The gateway 2, having received the activation signal S13, transmits an activation request signal S14 to the communication apparatus 1. Upon reception of the activation request signal S14, the communication apparatus 1 activates the second communication unit 12 using the first function of the control unit 13. Hence, when the second communication unit 12 is activated at a time t11, as shown in FIG. 3, the power consumption of the second communication unit 12, which was zero prior to the time t11, increases relative to the power consumption prior to the time t11 from the time t11 onward. Note, however, that until the link 32 is established at a time t13, the second communication unit 12 remains on standby, and therefore the power consumption of the second communication unit 12 remains comparatively small. Note that it is not essential to the wireless communication system 10 that the monitoring apparatus 5 transmit the activation signal S13, and instead, the gateway 2 may transmit the activation request signal S14 using the warning signal S11 as a trigger.

When the second communication unit 12 is activated, the communication apparatus 1 transmits an authentication signal S15 to the gateway 2 using the fourth function of the control unit 13. The gateway 2, having received the authentication signal S15, checks the authentication information (the ID and the key information) expressed by the authentication signal S15. When the authentication information expressed by the authentication signal S15 differs from the authentication information stored in the gateway 2, the gateway 2 transmits an authentication notification signal S16 expressing new authentication information to the communication apparatus 1. When the authentication information expressed by the authentication signal S15 matches the authentication information stored in the gateway 2, the gateway 2 does not transmit the authentication notification signal S16. Note that it is not essential to the wireless communication system 10 that the communication apparatus 1 transmit the authentication signal S15 following activation of the second communication unit 12, and the communication apparatus 1 may transmit the authentication signal S15 only prior to activation of the second communication unit 12.

Next, the communication apparatus 1 transmits a condition signal S17 to the gateway 2 using the second function of the control unit 13. The condition signal S17 transmitted at this time is a signal indicating that activation of the second communication unit 12 is complete. Further, the communication apparatus 1 transmits human detection signals S18, S19 to the gateway 2 using the third function of the control unit 13. The human detection signal S18 is a detection result obtained by the human detection unit 18 on the basis of the output of the infrared ray sensor 181. The human detection signal S19 is a detection result obtained by the human detection unit 18 on the basis of the output (the SPL) of the sound sensor. The gateway 2, having received the human detection signals S18, S19, transmits a notification signal S20 to the monitoring apparatus 5. The notification signal S20 is a signal indicating that activation of the second communication unit 12 is complete and expressing the detection results obtained by the human detection unit 18.

Next, the monitoring apparatus 5 transmits a connection signal S21 to the gateway 2. The connection signal S21 is a signal instructing the gateway 2 to transmit the connection request signal. The gateway 2, having received the connection signal S21, transmits a connection request signal S22 to the communication apparatus 1. Upon reception of the connection request signal S22, the communication apparatus 1 establishes the link 32 between the second communication unit 12 and the gateway 2 using the first function of the control unit 13. Hence, when the link 32 is established at the time tl3, as shown in FIG. 3, the power consumption of the second communication unit 12, which was previously on standby, increases relative to the power consumption prior to the time t13 from the time t13 onward. When the link 32 is established, verbal communication becomes possible between the operator 300 and the user 200. Note that rather than establishing the link 32 immediately at a time t12 when the communication apparatus 1 receives the connection request signal S22, a time lag is provided between the time t12 at which the communication apparatus 1 receives the connection request signal S22 and the time t13 at which the link 32 is established.

When the verbal communication between the operator 300 and the user 200 is terminated, the monitoring apparatus 5 transmits a cut signal to the gateway 2. The gateway 2, having received the cut signal, transmits the cut request signal to the communication apparatus 1. Upon reception of the cut request signal, the communication apparatus 1 cuts the link 32 using the first function of the control unit 13. When the fixed time elapses thereafter, the second communication unit 12 is stopped automatically. The cut request signal is received by the first communication unit 11.

Incidentally, a wait time of a certain length (around several to ten seconds, for example) is required between the time t11 at which the second communication unit 12 is activated and the time t13 at which the link 32 is established. The wait time varies according to conditions of the radio waves and so on rather than having a fixed length. In this embodiment, the control unit 13 activates the second communication unit 12 prior to the authentication processing for authenticating communication by the second communication unit 12 and transmission of the human detection signals S18, S19. In other words, the wait time until establishment of the link 32 is used to perform the authentication processing for authenticating communication by the second communication unit 12, and to transmit the human detection signals S18, S19. As a result, the communication apparatus 1 can establish the link 32 at a slight time lag following reception of the connection request signal S22.

Further, upon reception of the notification signal S20, the monitoring apparatus 5 outputs the content of the notification signal S20, i.e. the fact that activation of the second communication unit 12 is complete and the detection results obtained by the human detection unit 18, in the form of a display or a voice. As a result, the operator 300 is informed that activation of the second communication unit 12 is complete and notified of the detection results obtained by the human detection unit 18. Note, however, that it is not essential to the wireless communication system 10 that the monitoring apparatus 5 notify the operator 300 of the content of the notification signal S20 upon reception thereof. The monitoring apparatus 5 may also notify the operator 300 that the link 32 is established, or in other words that verbal communication with the user 200 is possible, after the link 32 is established, for example.

After the link 32 is established, or in other words from the time t13 onward, the communication apparatus 1 may transmit the condition signal to the gateway 2 using the second function of the control unit 13. The condition signal transmitted at this time is a signal indicating that the link 32 is established. The condition signal is transmitted to the gateway 2 from the first communication unit 11 even after the link 32 is established.

### (3.2) Operation performed with plural communication apparatuses

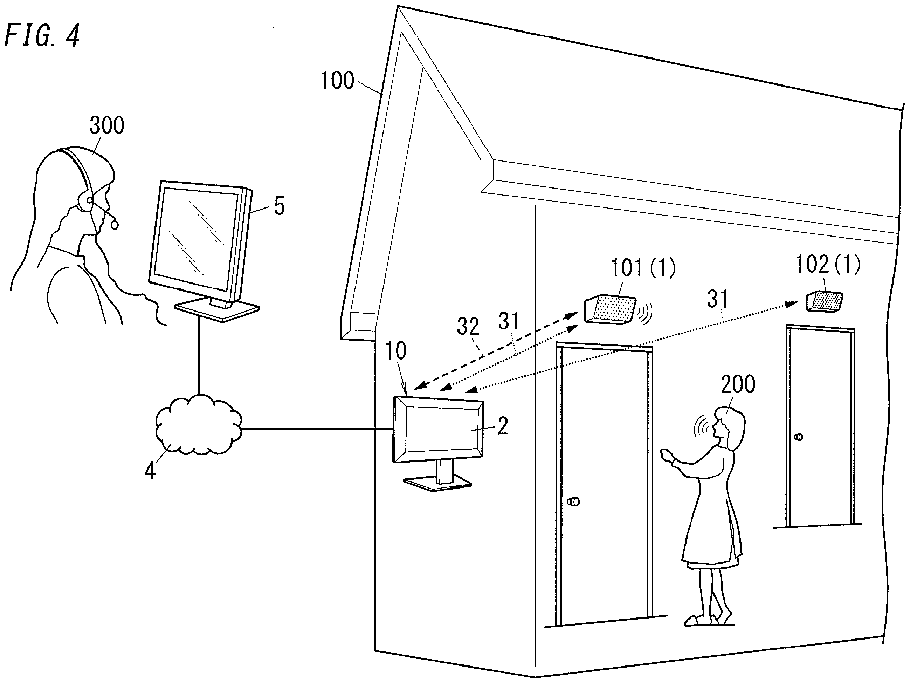

Next, as shown in FIG. 4, an operation performed by the wireless communication system 10 in a case where a plurality of communication apparatuses 101, 102 (two in the example in the drawing) are disposed in the single residence 100 will be described, focusing only on points that differ from the basic operation described above.

The plurality of communication apparatuses 101, 102 are disposed in different rooms. For example, the communication apparatus 101 is disposed in the living room while the communication apparatus 102 is disposed in a bedroom. In the case envisaged here, the monitoring terminal 6 detects an abnormality in the residence 100 while a human being (the user 200) is present only in the room where the communication apparatus 101, among the plurality of communication apparatuses 101, 102, is disposed. Note that each of the communication apparatuses 101, 102 is configured identically to the communication apparatus 1 described above.

In this case, the gateway 2 transmits the activation request signal S14 to both of the communication apparatuses 101, 102. Next, each of the plurality of the communication apparatuses 101, 102 transmits the human detection signals S18, S19 to the gateway 2. Here, the human detection signals S18, S19 transmitted by the communication apparatus 101 indicate the presence of a human being. The human detection signals S18, S19 transmitted by the communication apparatus 102, on the other hand, indicate that no human beings are present. The gateway 2 transmits the notification signal S20 indicating that a human being is present in the room where the communication apparatus 101 is disposed to the monitoring apparatus 5. Having received the detection results obtained by the human detection units 18 provided respectively in the plurality of communication apparatuses 101, 102, the operator 300 selects the communication apparatus 101 requesting verbal communication.

Next, the monitoring apparatus 5 transmits to the gateway 2 the connection signal S21 instructing the gateway 2 to transmit the connection request signal to the communication apparatus 101. The gateway 2, having received the connection signal S21, transmits the connection request signal s22 to only the communication apparatus 101 of the plurality of communication apparatuses 101, 102. As a result, the link 32 is established between the second communication unit 12 of the communication apparatus 101 and the gateway 2, whereby verbal communication becomes possible between the operator 300 and the user 200.

Note that with the second communication system (DECT), the link 32 can be established between the single gateway 2 and a maximum of four communication apparatuses 1 simultaneously. The link 32 may therefore be established between the gateway 2 and both of the communication apparatuses 101, 102. When the link 32 is established in the plurality of communication apparatuses 1 simultaneously, the voice data transmitted from the plurality of communication apparatuses 1 is synthesized by the gateway 2.

### (3.3) Registration operation

After the communication apparatus 1 is activated, the communication apparatus 1 implements pairing (registration) processing between the second communication unit 12 and the second wireless unit 22 of the gateway 2. Here, an operation performed by the communication apparatus 1 for the purpose of the pairing processing will be described.

When the communication apparatus 1 is activated, the communication apparatus 1 communicates with the gateway 2 through the first communication unit 11 in order to obtain the authentication information (the ID and the key information) relating to communication by the second communication unit 12 from the gateway 2. The control unit 13 stores the obtained authentication information in both the first storage unit 111 of the first communication unit 11 and the second storage unit 121 of the second communication unit 12. For this purpose, the control unit 13 activates the second communication unit 12 temporarily after obtaining the authentication information, and stops the second communication unit 12 after writing the authentication information to the second storage unit 121.

Hence, the second communication unit 12 and the gateway 2 can be paired without performing communication using the second communication system (DECT). As a result, the power consumption of the communication apparatus 1 can be kept comparatively small during the pairing processing.

Alternatively, the control unit 13 may check whether or not the obtained authentication information is registered, or in other words stored in the second storage unit 121, and activate the second communication unit 12 in order to write the authentication information to the second storage unit 121 only when the authentication information is not registered. In this embodiment, the second storage unit 121 is a nonvolatile memory, and therefore the control unit 13 preferably activates the second communication unit 12 temporarily when the communication apparatus 1 is activated in order to read the authentication information stored in the second storage unit 121. The authentication information read from the second storage unit 121 is copied to the first storage unit 111. When the authentication information obtained from the gateway 2 matches the authentication information copied to the first storage unit 111, the control unit 13 determines that the authentication information is registered. When the authentication information obtained from the gateway 2 does not match the authentication information copied to the first storage unit 111, the control unit 13 determines that the authentication information is not registered, and writes the authentication information to the second storage unit 121.

Hence, after the communication apparatus 1 obtains the authentication information from the gateway, the second communication unit 12 is activated only when the obtained authentication information is not registered. As a result, the power consumption of the communication apparatus 1 can be kept comparatively small during the pairing processing. Furthermore, the authentication information required to determine whether or not the authentication information obtained from the gateway 2 is registered is copied to the first storage unit 111 from the second storage unit 121, and therefore an activation time of the second communication unit 12 can be minimized.

### (4) Effects

According to the communication apparatus 1 described above, the transmission speed at which data are transmitted between the communication apparatus 1 and the gateway (the control apparatus) 2 can be increased by using the second communication unit 12. Further, the control unit 13 activates the second communication unit 12 when the first communication unit 11 receives the activation request signal from the gateway 2. Therefore, the communication apparatus 1 activates the second communication unit 12 only when required, and as a result, the power consumption of the second communication unit 12 can be reduced. Furthermore, the control unit 13 establishes the link 32 between the second communication unit 12 and the gateway 2 when the first communication unit 11 receives the connection request signal from the gateway 2 after the second communication unit 12 is activated. In the communication apparatus 1, therefore, the link 32 remains cut even after the second communication unit 12 is activated until the second communication unit 12 starts to transmit data, and as a result, the power consumption of the second communication unit 12 can be reduced.

Hence, with the communication apparatus 1 according to this embodiment, the power consumption of the second communication unit 12 can be reduced even when the data transmission speed is increased by using the second communication unit 12. In the communication apparatus 1, therefore, the amount of power consumed during communication can be reduced even when the data transmission speed is increased.

Further, according to the communication apparatus 1, activation of the second communication unit 12 as well as establishment and cutting of the link 32 between the second communication unit 12 and the gateway 2 can be controlled even without providing a user interface (a switch or the like) that is operated by the user 200 by hand. Basically, activation of the second communication unit 12 and establishment and cutting of the link 32 are controlled by communicating with the gateway 2 using the first communication unit 11, and therefore a user interface operated by the user 200 by hand is not required. In this case, the second communication system is not used to establish and cut the link 32, and therefore a communication system used exclusively for verbal communication (such as DECT) can be applied as the second communication system.

Moreover, the control unit 13 is preferably configured to transmit the condition signal to the gateway (the control apparatus) 2 from the first communication unit 11 after activating the second communication unit 12 but before establishing the link 32, as in this embodiment. The condition signal expresses at least one of the operating condition of the second communication unit 12 and the condition of the link 32. According to this configuration, the gateway 2 is notified of at least one of the operating condition of the second communication unit 12 and the condition of the link 32, and therefore the gateway 2 can learn whether or not activation of the second communication unit 12 is complete, for example. By also having the gateway 2 notify the monitoring apparatus 5 of this information, the operator 300 can check the condition of the communication apparatus 1. Note that the configuration (the second function) whereby the control unit 13 transmits the condition signal to the gateway 2 from the first communication unit 11 is not an essential configuration of the communication apparatus 1, and may be omitted as appropriate.

Furthermore, the communication apparatus 1 preferably further includes the human detection unit 18 that detects the presence of a human being in the subject area, as in this embodiment. In this case, the control unit 13 is configured to transmit the human detection signal indicating the detection result obtained by the human detection unit 18 to the gateway (the control apparatus) 2 from the first communication unit 11 before establishing the link 32. According to this configuration, the gateway 2 is notified of the detection result obtained by the human detection unit 18, and therefore the gateway 2 can learn whether or not a human being is present in the vicinity of the communication apparatus 1, for example. When the communication apparatus 1 is provided in a plurality, the link 32 can be established between the gateway 2 and the communication apparatus 1 to which the human being is closest, among the plurality of communication apparatuses 1. Hence, the link 32 is not established between the gateway 2 and the communication apparatus 1 that is not required, and therefore the power consumption of the second communication unit 12 can be reduced even further. Note that the configuration (the third function) whereby the control unit 13 transmits the human detection signal to the gateway 2 from the first communication unit 11 is not an essential configuration of the communication apparatus 1, and may be omitted as appropriate.

Further, the human detection unit 18 preferably includes the sound sensor (the microphone 14) that detects the presence of a human being on the basis of the sound pressure of a sound input from the subject area, as in this embodiment. According to this configuration, the microphone 14 used for verbal communication can be used to detect the presence of a human being, thereby eliminating the need to add a device for detecting the presence of human beings. Note that the configuration whereby the human detection unit 18 includes the sound sensor is not an essential configuration of the communication apparatus 1, and may be omitted as appropriate.

Moreover, the human detection unit 18 preferably includes the passive infrared ray sensor 181 that detects the presence of a human being on the basis of variation in the amount of infrared rays input from the subject area, as in this embodiment. According to this configuration, the presence of a human being can be detected without effects from noise on the periphery of the communication apparatus 1. Note that the configuration whereby the human detection unit 18 includes the infrared ray sensor 181 is not an essential configuration of the communication apparatus 1, and may be omitted as appropriate.

Furthermore, the first communication unit 11 preferably includes the storage unit (the first storage unit 111) for storing the authentication information used to establish the link 32, as in this embodiment. According to this configuration, the second communication unit 12 can be maintained on standby during the authentication processing for establishing the link 32, and as a result, the power consumption of the second communication unit 12 can be reduced even more until the link 32 is established. Note that the configuration whereby the first communication unit 11 includes the storage unit for storing the authentication information is not an essential configuration of the communication apparatus 1, and may be omitted as appropriate.

Moreover, the control unit 13 is preferably configured to transmit the authentication signal expressing the authentication information to the gateway (the control apparatus) 2 from the first communication unit 11 before establishing the link 32, as in this embodiment. According to this configuration, the authentication processing for establishing the link 32 is performed by the first communication unit 11, and therefore the power consumption of the second communication unit 12 can be reduced even more until the link 32 is established. Note that the configuration (the fourth function) whereby the control unit 13 transmits the authentication signal to the gateway 2 from the first communication unit 11 is not an essential configuration of the communication apparatus 1, and may be omitted as appropriate.

Furthermore, the second communication system is preferably a DECT compliant system, as in this embodiment. According to this configuration, the second communication unit 12 can perform comparatively high-speed data transmission such as verbal communication while consuming a comparatively small amount of power.

Further, the wireless communication system 10 includes the communication apparatus 1 and the gateway (the control apparatus) 2. According to the wireless communication system 10, the data transmission speed can be increased by using the second communication unit 12 while suppressing the power consumption of the second communication unit 12. Hence, in the communication apparatus 1, the amount of power consumed during communication can be reduced even when the data transmission speed is increased.

### (5) Modified examples

Modified examples of the first embodiment will now be described.

As long as the second communication system has a higher transmission speed than the first communication system, the first communication system is not limited to SRD, and the second communication system is not limited to a DECT compliant system. The second communication system may be Wi-Fi (registered trademark), Bluetooth (registered trademark), for example. Note that a different communication system to the first communication system may be used between the monitoring terminal 6 and the gateway 2. Moreover, communication between the monitoring terminal 6 and the gateway 2 is not limited to wireless communication, and may be wired communication instead.

The communication apparatus 1 is not limited to a verbal communication terminal having a verbal communication function. The communication apparatus 1 may be an apparatus that transmits video data relating to a video of the interior of the residence 100, captured by a camera, for example, to the monitoring apparatus 5. In this case, the second communication unit 12 is used to transmit the video data instead of voice data. In other words, the video data can be transmitted from the communication apparatus 1 to the gateway 2 only when the link 32 is established between the second communication unit 12 and the gateway 2.

Further, the fourth function of the control unit 13 may be omitted such that the authentication processing for authenticating communication by the second communication unit 12 is performed by the second communication unit 12. In this case, the second communication unit 12 transmits the authentication signal to the gateway 2 and receives the authentication result signal from the gateway 2 after being activated. In this case, the second communication unit 12 communicates with the gateway 2 temporarily for the purpose of the authentication processing before the link 32 is established, and therefore the power consumption of the second communication unit 12 temporarily increases. Nevertheless, in comparison with a case where the second communication unit 12 communicates with the gateway 2 at all times, the power consumption of the second communication unit 12 prior to establishment of the link 32 remains small.

Furthermore, in the first embodiment, the control unit 13 transmits the human detection signal after activating the second communication unit 12, but the present invention is not limited thereto, and the control unit 13 may transmit the human detection signal before activating the second communication unit 12. In other words, as long as the communication apparatus 1 does not use the first processing unit 16 that operates in conjunction with the second communication unit 12 to input the SPL into the human detection unit 18, the human detection signal can be transmitted even before the second communication unit 12 is activated.

Moreover, the first storage unit 111 may be a nonvolatile memory and the second storage unit 121 may be a volatile memory. In this case, the control unit 13 preferably writes the authentication information stored in the first storage unit 111 to the second storage unit 121 every time the second communication unit 12 is activated. Accordingly, the authentication information in the first storage unit 111 is copied to the second storage unit 121 every time the second communication unit 12 is activated. As a result, the authentication information (the ID and the key information) relating to communication by the second communication unit 12 need not be obtained from the gateway 2 every time the second communication unit 12 is activated even in a case where the second communication unit 12 is not provided with a nonvolatile memory.

### (Second Embodiment)

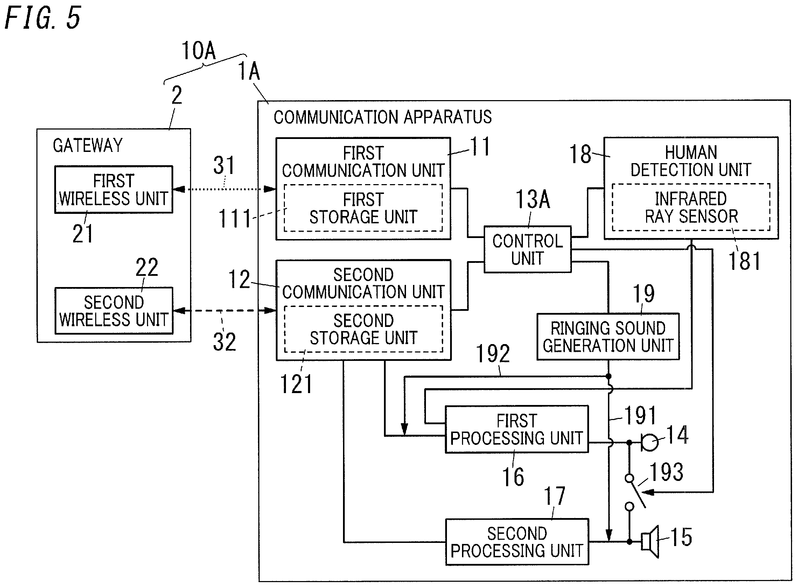

As shown in FIG. 5, a communication apparatus 1A and a wireless communication system 10A according to this embodiment differ from the communication apparatus 1 and the wireless communication system 10 according to the first embodiment in that the communication apparatus 1A includes a ringing sound generation unit 19. Hereafter, identical configurations to the first embodiment have been allocated common reference symbols, and description thereof has been omitted as appropriate. Note that the communication apparatus 1A, the wireless communication system 10A, and a control unit 13A according to this embodiment correspond respectively to the communication apparatus 1, the wireless communication system 10, and the control unit 13 according to the first embodiment.

The ringing sound generation unit 19 outputs a ringing sound such as a call sound. In this embodiment, the ringing sound generation unit 19 is configured to output the ringing sound from the speaker 15 used for verbal communication. In the example of FIG. 5, the ringing sound generation unit 19 is electrically connected to the speaker 15 via a first path 191. However, the speaker 15 may be provided in the ringing sound generation unit 19. The ringing sound generation unit 19 is electrically connected to the control unit 13A so as to be controlled by the control unit 13A. The ringing sound generation unit 19 outputs a ringing signal corresponding to the ringing sound after receiving a reproduction instruction from the control unit 13A, whereupon the ringing sound is output, or in other words the ringing sound is reproduced, from the speaker 15. Here, the "ringing sound" is a sound having a predetermined length and a predetermined pattern. The ringing sound according to this embodiment is a sound for calling the user 200 to prompt the user 200 to begin verbal communication with the operator 300. Note that the ringing sound may be an alarm or a warning sound.

Furthermore, in this embodiment, the second communication unit 12 is configured to transmit the ringing signal corresponding to the ringing sound to the gateway 2 after establishing the link 32. More specifically, as shown in FIG. 5, the ringing sound generation unit 19 is electrically connected to the second communication unit 12 via a second path 192. Hence, when the ringing sound generation unit 19 outputs the ringing signal corresponding to the ringing sound, the ringing signal is transmitted to both the speaker 15 and the second communication unit 12. Therefore, when the link 32 is established between the second communication unit 12 and the gateway 2, the ringing signal is transmitted to the gateway 2 at the same time as the ringing sound is output through the speaker 15.

Moreover, the communication apparatus 1A according to this embodiment further includes a switching element 193 provided between an output terminal of the second processing unit 17 and an input terminal of the first processing unit 16. The switching element 193 is electrically connected to the control unit 13A so as to be controlled by the control unit 13A. When the switching element 193 is OFF, the output terminal of the second processing unit 17 and the input terminal of the first processing unit 16 are electrically disconnected. When the switching element 193 is ON, on the other hand, a loopback path is formed between the output terminal of the second processing unit 17 and the input terminal of the first processing unit 16. Note that the switching element 193 is not limited to an electronic component having an actual physical form, and may be a function of the control unit 13A realized by a program.

When the loopback path is formed, the voice signal output from the second processing unit 17 is input into the first processing unit 16 and looped back to the second communication unit 12. Hence, when the loopback path is formed, the voice data received by the second communication unit 12 from the gateway 2 are looped back to the gateway 2 from the second communication unit 12.

In this embodiment, the control unit 13A includes fifth and sixth functions described below in addition to the first to fourth functions.

The fifth function of the control unit 13A is a function for causing the ringing sound generation unit 19 to output the ringing sound. The control unit 13A causes the ringing sound generation unit 19 to output the ringing sound when the first communication unit 11 receives a ringing request signal from the gateway 2 after activating the second communication unit 12 but before establishing the link 32.

The sixth function of the control unit 13A is a function for switching an operating mode of the control unit 13A between a normal mode and a test mode. The normal mode is set as the operating mode of the control unit 13A in a steady state, and when a test request signal from the gateway 2 is received by the first communication unit 11, the operating mode is switched to the test mode. When the first communication unit 11 receives a test termination signal from the gateway 2 while the test mode is set as the operating mode of the control unit 13A, the operating mode is switched to the normal mode.

When the test mode is set as the operating mode, the control unit 13A transmits the voice data, received by the second communication unit 12 from the gateway 2, to the gateway 2 from the second communication unit 12. More specifically, the control unit 13A controls the switching element 193 in accordance with the operating mode. When the normal mode is set as the operating mode of the control unit 13A, the control unit 13A switches the switching element 193 OFF. When the test mode is set as the operating mode of the control unit 13A, the control unit 13A switches the switching element 193 ON. Hence, when the test mode is set as the operating mode, the loopback path is formed such that the voice data received by the second communication unit 12 from the gateway 2 are transmitted to the gateway 2 from the second communication unit 12.

Note that when the test mode is set as the operating mode of the control unit 13A, the speaker 15 is preferably muted. Thus, in the test mode, the operations of the communication apparatus 1A can be checked by the operator 300 without issuing sounds from the communication apparatus 1A.

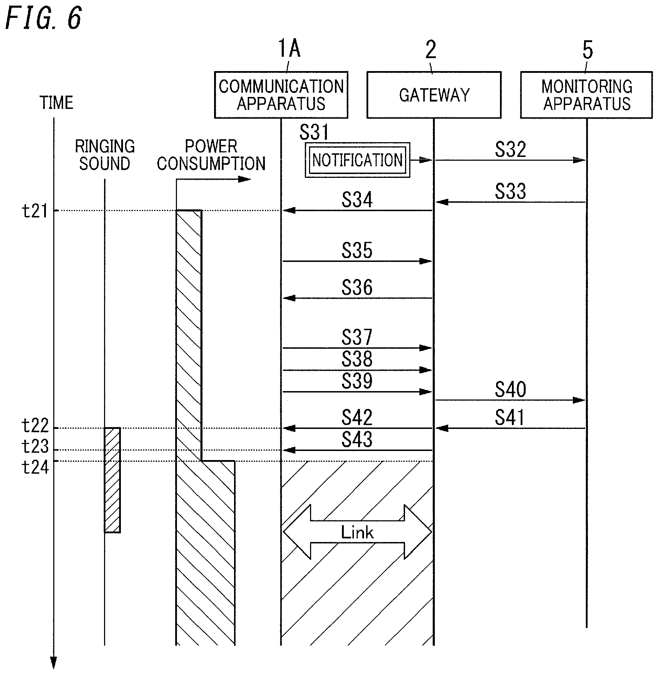

A basic operation of the communication apparatus 1A and the wireless communication system 10A including the communication apparatus 1A according to this embodiment will now be described with reference to FIG. 6. In FIG. 6, the ordinate is a temporal axis showing a flow of signals between the nodes (the communication apparatus 1A, the gateway 2, and the monitoring apparatus 5) in time series. The ordinate also shows the power consumption of the second communication unit 12 as "power consumption". Furthermore, in FIG. 6, output of the ringing sound is indicated as "ringing sound" (a shaded part indicates that the ringing sound is output).

Here, an operation performed in a case where the normal mode is set as the operating mode of the control unit 13A will be described. S31 to S41 and S43 in FIG. 6 correspond respectively to S11 to S22 in FIG. 3, which were described in the first embodiment. Operations up to the point at which the monitoring apparatus 5 transmits a connection signal S41 to the gateway 2 are identical to the first embodiment, and therefore description thereof has been omitted.

The gateway 2, having received the connection signal S41, transmits a ringing request signal S42 to the communication apparatus 1A. Upon reception of the ringing request signal S42, the communication apparatus 1A causes the ringing sound generation unit 19 to output the ringing sound using the fifth function of the control unit 13A. Accordingly, as shown in FIG. 6, output of the ringing sound starts from a time t22 at which the communication apparatus 1A receives the ringing request signal S42. The ringing request signal S42 is received by the first communication unit 11.

Next, at a time t23 following the elapse of the predetermined time, the gateway 2 transmits a connection request signal S43 to the communication apparatus 1A. Upon reception of the connection request signal S43, the communication apparatus 1A establishes the link 32 between the second communication unit 12 and the gateway 2 using the first function of the control unit 13A. When the link 32 is established at a time t24, verbal communication becomes possible between the operator 300 and the user 200. Further, from the time t24 at which the link 32 is established onward, the ringing signal is transmitted to the gateway 2.

The gateway 2 forwards the ringing signal to the monitoring apparatus 5, and the monitoring apparatus 5 reproduces the ringing signal so that the operator 300 can hear the ringing sound as a so-called ringback tone. As a result, the operator 300 can wait for the ringing sound to stop ringing and then begin verbal communication with the user 200.

Incidentally, providing a time lag of a predetermined length between the time t22 at which the gateway 2 transmits the ringing request signal S42 and the time t23 at which the gateway 2 transmits the connection request signal S43, as described above, has the following merits. Even when the link 32 is established, the operator 300 does not communicate verbally with the user 200 during a period in which the ringing sound is output (referred to hereafter as a "ringing period"). By providing the aforesaid time lag, the timing at which the link 32 is established can be delayed, thereby reducing overlap between the ringing period and the period in which the link 32 is established. As a result, the power consumption of the second communication unit 12 can be reduced even further. Note that providing a time lag between the ringing request signal S42 and the connection request signal S43 is not an essential configuration of the communication apparatus 1A, and instead, for example, a single signal may be used as both the ringing request signal and the connection request signal.

The communication apparatus 1A preferably further includes the ringing sound generation unit 19 that outputs the ringing sound, as in this embodiment. In this case, the control unit 13A is preferably configured to cause the ringing sound generation unit 19 to output the ringing sound when the first communication unit 11 receives the ringing request signal from the gateway (the control apparatus) 2 after activating the second communication unit 12 but before establishing the link 32. According to this configuration, control of the ringing sound generation unit 19 is performed using the first communication system (SRD), and therefore output of the ringing sound can be started before the link 32 is established. As a result, output of the ringing sound and establishment of the link 32 can be performed in parallel, enabling a reduction in the time required to start verbal communication. Moreover, the power consumption of the second communication unit 12 can be reduced even further.

Furthermore, the second communication unit 12 is preferably configured to transmit the ringing signal corresponding to the ringing sound to the gateway (the control apparatus) 2 after the link 32 is established, as in this embodiment. According to this configuration, the gateway 2 is notified of the output condition of the ringing sound, and therefore the operator 300 can wait for the ringing sound to stop ringing and then begin verbal communication with the user 200, for example. Moreover, the operation of the ringing sound generation unit 19 can be checked in the gateway 2. Note that the configuration whereby the second communication unit 12 transmits the ringing signal to the gateway 2 is not an essential configuration of the communication apparatus 1A, and may be omitted as appropriate.

Further, the operating mode of the control unit 13A can preferably be switched between the normal mode and the test mode, as in this embodiment. In this case, the control unit 13A is configured to transmit the voice data, received by the second communication unit 12 from the gateway (the control apparatus) 2, to the gateway (the control apparatus) 2 from the second communication unit 12 when the test mode is set as the operating mode. According to this configuration, in the test mode, the data received by the second communication unit 12 from the gateway 2 are looped back to the gateway 2 from the second communication unit 12. As a result, the operations of the communication apparatus 1A can be checked in the gateway 2. Note that the configuration (the sixth function) whereby the operating mode of the control unit 13A is switched is not an essential configuration of the communication apparatus 1A, and may be omitted as appropriate.

The configurations of the second embodiment may be combined with the configurations of the first embodiment (including the modified examples) as appropriate and applied thus.

As it is obvious from the embodiments described above, a communication apparatus (1, 1A) according to a first aspect includes a first communication unit (11), a second communication unit (12), and a control unit (13, 13A). The first communication unit (11) performs wireless communication with a control apparatus using a first communication system. The second communication unit (12) that performs wireless communication with the control apparatus using a second communication system having a higher transmission speed than the first communication system. The control unit (13, 13A) is configured to activate the second communication unit (12) when the first communication unit (11) receives an activation request signal from the control apparatus. The control unit (13, 13A) is configured to establish a link (32) between the second communication unit (12) and the control apparatus when the first communication unit (11) receives a connection request signal from the control apparatus after the second communication unit (12) is activated.

Regarding a communication apparatus (1, 1A) according to a second aspect, in the first aspect, the control unit (13, 13A) is configured to transmit a condition signal to the control apparatus from the first communication unit (11) after activating the second communication unit (12) but before establishing the link (32). The condition signal expresses at least one of an operating condition of the second communication unit (12) and a condition of the link (32).

Regarding a communication apparatus (1, 1A) according to a third aspect, in the first aspect or the second aspect, the communication apparatus (1, 1A) further includes a ringing sound generation unit (19) that outputs a ringing sound. The control unit (13, 13A) is configured to cause the ringing sound generation unit (19) to output the ringing sound when the first communication unit (11) receives a ringing request signal from the control apparatus after the second communication unit (12) is activated but before the link (32) is established.

Regarding a communication apparatus (1, 1A) according to a fourth aspect, in the third aspect, the second communication unit (12) is configured to transmit a ringing signal corresponding to the ringing sound to the control apparatus after the link (32) is established.

Regarding a communication apparatus (1, 1A) according to a fifth aspect, in any one of the first to fourth aspects, the communication apparatus (1, 1A) further includes a human detection unit (18) that detects the presence of a human being in a subject area. The control unit (13, 13A) is configured to transmit a human detection signal indicating a detection result obtained by the human detection unit (18) to the control apparatus from the first communication unit (11) before establishing the link (32).

Regarding a communication apparatus (1, 1A) according to a sixth aspect, in the fifth aspect, the human detection unit (18) includes a sound sensor that detects the presence of a human being on the basis of a sound pressure of a sound input from the subject area.

Regarding a communication apparatus (1, 1A) according to a seventh aspect, in the fifth aspect or the sixth aspect, the human detection unit (18) includes a passive infrared ray sensor (181) that detects the presence of a human being on the basis of variation in an amount of infrared rays input from the subject area.

Regarding a communication apparatus (1, 1A) according to an eighth aspect, in any one of the first to seventh aspects, an operating mode of the control unit (13, 13A) can be switched between a normal mode and a test mode. The control unit (13, 13A) is configured to transmit voice data, received from the control apparatus by the second communication unit (12), to the control apparatus from the second communication unit (12) when the test mode is set as the operating mode.

Regarding a communication apparatus (1, 1A) according to a ninth aspect, in any one of the first to eighth aspects, the first communication unit (11) includes a storage unit for storing authentication information used to establish the link (32).

Regarding a communication apparatus (1, 1A) according to a tenth aspect, in the ninth aspect, the control unit (13, 13A) is configured to transmit an authentication signal expressing the authentication information to the control apparatus from the first communication unit (11) before establishing the link (32).

Regarding a communication apparatus (1, 1A) according to an eleventh aspect, in any one of the first to tenth aspects, the second communication system is a DECT compliant system.

A wireless communication system (10, 10A) according to a twelfth aspect includes: the communication apparatus (1, 1A) according to any one of the first to eleventh aspects; and the control apparatus.

## Claims

1. A communication apparatus (1, 1A) comprising:
a first communication unit (11) that performs wireless communication with a control apparatus using a first communication system;
a second communication unit (12) that performs wireless communication with said control apparatus using a second communication system having a higher transmission speed than said first communication system; and
a control unit (13, 13A),
wherein said control unit (13, 13A) is configured to:
activate said second communication unit (12) when said first communication unit (11) receives an activation request signal from said control apparatus,
increase power consumption of said second communication unit (12), when said second communication unit (12) is activated;
increase power consumption of said second communication unit (12), when a link (32) between said second communication unit (12) and said control apparatus is established, wherein said increase in the power consumption is relative to the power consumption prior to the time the link (32) is established;
not to establish the link (32) until said first communication unit (11) receives a connection request signal from said control apparatus, even after said second communication unit (12) is activated, and
establish said link (32) between said second communication unit (12) and said control apparatus when said first communication unit (11) receives a connection request signal from said control apparatus after said second communication unit (12) is activated.

2. The communication apparatus (1, 1A) according to claim 1, wherein said control unit (13, 13A) is configured to transmit a condition signal expressing at least one of an operating condition of said second communication unit (12) and a condition of said link (32) to said control apparatus from said first communication unit (11) after activating said second communication unit (12) but before establishing said link (32).

3. The communication apparatus (1, 1A) according to claim 1 or 2, further comprising a ringing sound generation unit (19) that outputs a ringing sound,
wherein said control unit (13, 13A) is configured to cause said ringing sound generation unit (19) to output said ringing sound when said first communication unit (11) receives a ringing request signal from said control apparatus after said second communication unit (12) is activated but before said link (32) is established.

4. The communication apparatus (1, 1A) according to claim 3, wherein said second communication unit (12) is configured to transmit a ringing signal corresponding to said ringing sound to said control apparatus after said link (32) is established.

5. The communication apparatus (1, 1A) according to any one of claims 1 to 4, further comprising a human detection unit (18) that detects the presence of a human being in a subject area,
wherein said control unit (13, 13A) is configured to transmit a human detection signal indicating a detection result obtained by said human detection unit (18) to said control apparatus from said first communication unit (11) before establishing said link (32).

6. The communication apparatus (1, 1A) according to claim 5, wherein said human detection unit (18) comprises a sound sensor that detects the presence of a human being on the basis of a sound pressure of a sound input from said subject area.

7. The communication apparatus (1, 1A) according to claim 5 or 6, wherein said human detection unit (18) comprises a passive infrared ray sensor (181) that detects the presence of a human being on the basis of variation in an amount of infrared rays input from said subject area.

8. The communication apparatus (1, 1A) according to any one of claims 1 to 7, wherein
an operating mode of said control unit (13, 13A) can be switched between a normal mode and a test mode, and
said control unit (13, 13A) is configured to transmit voice data, received from said control apparatus by said second communication unit (12), to said control apparatus from said second communication unit (12) when said test mode is set as said operating mode.

9. The communication apparatus (1, 1A) according to any one of claims 1 to 8, wherein said first communication unit (11) comprises a storage unit for storing authentication information used to establish said link (32).

10. The communication apparatus (1, 1A) according to claim 9, wherein said control unit (13, 13A) is configured to transmit an authentication signal expressing said authentication information to said control apparatus from said first communication unit (11) before establishing said link (32).

11. The communication apparatus (1, 1A) according to any one of claims 1 to 10, wherein said second communication system is a DECT compliant system.

12. A wireless communication system (10, 10A) comprising:
a communication apparatus (1, 1A) according to any one of claims 1 to 11, wherein the communication apparatus (1, 1A) performs wireless communication with a control apparatus; and
said control apparatus.

## Patentansprüche

1. Kommunikationsvorrichtung (1, 1A), umfassend:
eine erste Kommunikationseinheit (11), die eine drahtlose Kommunikation mit einer Steuervorrichtung unter Verwendung eines ersten Kommunikationssystems durchführt;
eine zweite Kommunikationseinheit (12), die eine drahtlose Kommunikation mit der Steuervorrichtung unter Verwendung eines zweiten Kommunikationssystems durchführt, das eine höhere Übertragungsgeschwindigkeit als das erste Kommunikationssystem aufweist; und
eine Steuereinheit (13, 13A),
wobei die Steuereinheit (13, 13A) konfiguriert ist zum:
Aktivieren der zweiten Kommunikationseinheit (12), wenn die erste Kommunikationseinheit (11) ein Aktivierungsanforderungssignal von der Steuervorrichtung empfängt,
Erhöhen des Energieverbrauchs der zweiten Kommunikationseinheit (12), wenn die zweite Kommunikationseinheit (12) aktiviert ist;
Erhöhen des Energieverbrauchs der zweiten Kommunikationseinheit (12), wenn eine Verbindung (32) zwischen der zweiten Kommunikationseinheit (12) und der Steuervorrichtung hergestellt ist, wobei die Erhöhung des Energieverbrauchs relativ zu dem Energieverbrauch vor der Zeit stattfindet, zu der die Verbindung (32) hergestellt ist;
Nichtherstellen der Verbindung (32), bis die erste Kommunikationseinheit (11) ein Verbindungsanforderungssignal von der Steuervorrichtung empfängt, selbst nachdem die zweite Kommunikationseinheit (12) aktiviert ist, und
Herstellen der Verbindung (32) zwischen der zweiten Kommunikationseinheit (12) und der Steuervorrichtung, wenn die erste Kommunikationseinheit (11) ein Verbindungsanforderungssignal von der Steuervorrichtung empfängt, nachdem die zweite Kommunikationseinheit (12) aktiviert ist.

2. Kommunikationsvorrichtung (1, 1A) nach Anspruch 1, wobei die Steuereinheit (13, 13A) konfiguriert ist, ein Zustandssignal zu senden, das mindestens einen von einem Betriebszustand der zweiten Kommunikationseinheit (12) und einem Zustand der Verbindung (32) zu der Steuervorrichtung von der ersten Kommunikationseinheit (11) nach dem Aktivieren der zweiten Kommunikationseinheit (12), aber vor dem Herstellen der Verbindung (32) ausdrückt.

3. Kommunikationsvorrichtung (1, 1A) nach Anspruch 1 oder 2, ferner umfassend eine Klingeltonerzeugungseinheit (19), die einen Klingelton ausgibt,
wobei die Steuereinheit (13, 13A) konfiguriert ist, zu bewirken, dass die Klingeltonerzeugungseinheit (19) den Klingelton ausgibt, wenn die erste Kommunikationseinheit (11) nach der zweiten Kommunikationseinheit (12) ein Klingelanforderungssignal von der Steuervorrichtung empfängt, nachdem die zweiten Kommunikationseinheit (12) aktiviert ist, aber bevor die Verbindung (32) hergestellt ist.

4. Kommunikationsvorrichtung (1, 1A) nach Anspruch 3, wobei die zweite Kommunikationseinheit (12) konfiguriert ist, ein dem Klingelton entsprechendes Klingelsignal an die Steuervorrichtung zu senden, nachdem die Verbindung (32) hergestellt ist.

5. Kommunikationsvorrichtung (1, 1A) nach einem der Ansprüche 1 bis 4, ferner umfassend eine Menschendetektionseinheit (18), die die Anwesenheit eines Menschen in einem Objektbereich detektiert,
wobei die Steuereinheit (13, 13A) konfiguriert ist, ein Menschendetektionssignal, das ein von der Menschendetektionseinheit (18) erhaltenes Detektionsergebnis angibt, von der ersten Kommunikationseinheit (11) an die Steuervorrichtung zu senden, bevor die Verbindung (32) hergestellt ist.

6. Kommunikationsvorrichtung (1, 1A) nach Anspruch 5, wobei die Menschendetektionseinheit (18) einen Schallsensor umfasst, der die Anwesenheit eines Menschen basierend auf einen Schalldruck einer Schalleingabe von dem Objektbereich detektiert.

7. Kommunikationsvorrichtung (1, 1A) nach Anspruch 5 oder 6, wobei die Menschendetektionseinheit (18) einen passiven Infrarotstrahlensensor (181) umfasst, der die Anwesenheit eines Menschen basierend auf einer Variation in einem Betrag von Infrarotstrahlen, die von dem Objektbereich eingegeben werden, detektiert.

8. Kommunikationsvorrichtung (1, 1A) nach einem der Ansprüche 1 bis 7, wobei
ein Betriebsmodus der Steuereinheit (13, 13A) zwischen einem Normalmodus und einem Testmodus umgeschaltet werden kann, und
die Steuereinheit (13, 13A) konfiguriert ist, Sprachdaten, die durch die zweite Kommunikationseinheit (12) von der Steuervorrichtung empfangen wurden, von der zweiten Kommunikationseinheit (12) an die Steuervorrichtung zu senden, wenn der Testmodus als Betriebsmodus eingestellt ist.

9. Kommunikationsvorrichtung (1, 1A) nach einem der Ansprüche 1 bis 8, wobei die erste Kommunikationseinheit (11) eine Speichereinheit zum Speichern von zum Herstellen der Verbindung (32) verwendeten Authentifizierungsinformationen umfasst.

10. Kommunikationsvorrichtung (1, 1A) nach Anspruch 9, wobei die Steuereinheit (13, 13A) konfiguriert ist, ein Authentifizierungssignal, das die Authentifizierungsinformationen ausdrückt, von der ersten Kommunikationseinheit (11) an die Steuerungsvorrichtung zu senden, bevor die Verbindung (32) hergestellt wird.

11. Kommunikationsvorrichtung (1, 1A) nach einem der Ansprüche 1 bis 10, wobei das zweite Kommunikationssystem ein DECTkonformes System ist.

12. Drahtloskommunikationssystem (10, 10A), umfassend:
eine Kommunikationsvorrichtung (1, 1A) nach einem der Ansprüche 1 bis 11, wobei die Kommunikationsvorrichtung (1, 1A) eine drahtlose Kommunikation mit einer Steuervorrichtung durchführt; und
die Steuervorrichtung.

## Revendications

1. Appareil de communication (1, 1A) comprenant :
une première unité de communication (11) qui effectue une communication sans fil avec un appareil de commande en utilisant un premier système de communication ;
une deuxième unité de communication (12) qui effectue une communication sans fil avec ledit appareil de commande en utilisant un deuxième système de communication ayant une vitesse de transmission supérieure à celle dudit premier système de communication ; et
une unité de commande (13, 13A),
dans lequel ladite unité de commande (13, 13A) est configurée pour :
activer ladite deuxième unité de communication (12) lorsque ladite première unité de communication (11) reçoit un signal de demande d'activation dudit appareil de commande,
augmenter la consommation de puissance de ladite deuxième unité de communication (12), lorsque ladite deuxième unité de communication (12) est activée ;
augmenter la consommation de puissance de ladite deuxième unité de communication (12), lorsqu'une liaison (32) entre ladite deuxième unité de communication (12) et ledit appareil de commande est établie, dans lequel ladite augmentation de la consommation de puissance est relative à la consommation de puissance avant l'instant d'établissement de la liaison (32) ;
ne pas établir la liaison (32) jusqu'à ce que ladite première unité de communication (11) reçoive un signal de demande de connexion dudit appareil de commande, même après que ladite deuxième unité de communication (12) a été activée ; et
établir ladite liaison (32) entre ladite deuxième unité de communication (12) et ledit appareil de commande lorsque ladite première unité de communication (11) reçoit un signal de demande de connexion dudit appareil de commande après que ladite deuxième unité de communication (12) a été activée.

2. Appareil de communication (1, 1A) selon la revendication 1, dans lequel ladite unité de commande (13, 13A) est configurée pour transmettre un signal de condition exprimant au moins l'une d'une condition de fonctionnement de ladite deuxième unité de communication (12) et d'une condition de ladite liaison (32) audit appareil de commande à partir de ladite première unité de communication (11) après l'activation de ladite deuxième unité de communication (12), mais avant l'établissement de ladite liaison (32).

3. Appareil de communication (1, 1A) selon la revendication 1 ou 2, comprenant en outre une unité de génération de son de sonnerie (19) qui délivre un son de sonnerie,
dans lequel ladite unité de commande (13, 13A) est configurée pour amener ladite unité de génération de son de sonnerie (19) à sortir ledit son de sonnerie lorsque ladite première unité de communication (11) reçoit un signal de demande de sonnerie dudit appareil de commande après que ladite deuxième unité de communication (12) a été activée, mais avant que ladite liaison (32) ait été établie.

4. Appareil de communication (1, 1A) selon la revendication 3, dans lequel ladite deuxième unité de communication (12) est configurée pour transmettre un signal de sonnerie correspondant audit son de sonnerie audit appareil de commande après que ladite liaison (32) a été établie.

5. Appareil de communication (1, 1A) selon l'une quelconque des revendications 1 à 4, comprenant en outre une unité de détection d'être humain (18) qui détecte la présence d'un être humain qui se trouve dans une zone de sujet,
dans lequel ladite unité de commande (13, 13A) est configurée pour transmettre un signal de détection d'être humain indiquant un résultat de détection obtenu par ladite unité de détection d'être humain (18) audit appareil de commande à partir de ladite première unité de communication (11) avant l'établissement de ladite liaison (32).

6. Appareil de communication (1, 1A) selon la revendication 5, dans lequel ladite unité de détection d'être humain (18) comprend un capteur de son qui détecte la présence d'un être humain sur la base d'une pression sonore d'un son appliqué à partir de ladite zone de sujet.

7. Appareil de communication (1, 1A) selon la revendication 5 ou 6, dans lequel ladite unité de détection d'être humain (18) comprend un capteur de rayons infrarouges passif (181) qui détecte la présence d'un être humain sur la base d'une variation d'une quantité de rayons infrarouges appliqués à partir de ladite zone de sujet.

8. Appareil de communication (1, 1A) selon l'une quelconque des revendications 1 à 7, dans lequel
un mode de fonctionnement de ladite unité de commande (13, 13A) peut être commuté entre un mode normal et un mode de test, et
ladite unité de commande (13, 13A) est configurée pour transmettre les données vocales, reçues dudit appareil de commande par ladite deuxième unité de communication (12), audit appareil de commande à partir de ladite deuxième unité de communication (12) lorsque ledit mode de test est établi en tant que dit mode de fonctionnement.

9. Appareil de communication (1, 1A) selon l'une quelconque des revendications 1 à 8, dans lequel ladite première unité de communication (11) comprend une unité de mémorisation pour mémoriser des informations d'authentification utilisées pour établir ladite liaison (32).

10. Appareil de communication (1, 1A) selon la revendication 9, dans lequel ladite unité de commande (13, 13A) est configurée pour transmettre un signal d'authentification exprimant lesdites informations d'authentification audit appareil de commande à partir de ladite première unité de communication (11) avant l'établissement de ladite liaison (32).

11. Appareil de communication (1, 1A) selon l'une quelconque des revendications 1 à 10, dans lequel ledit deuxième système de communication est un système conforme à la norme DECT.

12. Système de communication sans fil (10, 10A) comprenant :
un appareil de communication (1, 1A) selon l'une quelconque des revendications 1 à 11, dans lequel l'appareil de communication (1, 1A) effectue une communication sans fil avec un appareil de commande ; et
ledit appareil de commande.
